# EUROPÄISCHE PATENTSCHRIFT

(11) **EP 2 739 382 B1**
(45) Veröffentlichungstag und Bekanntmachung des Hinweises auf die Patenterteilung: **07.10.2015**
(21) Anmeldenummer: 12740349.1
(22) Anmeldetag: 23.07.2012
(51) Int. Cl.: B01J 2/04, B01J 2/30, C08J 3/12

(54) **VERFAHREN ZUR HERSTELLUNG VON DISPERSIONSPULVERN**
PROCESS FOR PRODUCING DISPERSIBLE POWDERS
PROCÉDÉ DE PRÉPARATION DE POUDRES EN DISPERSION

(30) Priorität: 01.08.2011 DE 102011080233
(43) Veröffentlichungstag der Anmeldung: 11.06.2014
(73) Patentinhaber: Wacker Chemie AG, 81737 München (DE)
(72) Erfinder: HERBERT, Michael, 84489 Burghausen (DE); RING, Jochen, 76863 Herxheim (DE); KILLAT, Stefan, 84489 Burghausen (DE); GERSTENBERGER, Bernd, 84489 Burghausen (DE)
(74) Vertreter: Schuderer, Michael
(86) Internationale Anmeldenummer: PCT/EP2012/064430
(87) Internationale Veröffentlichungsnummer: WO 2013/017463

(56) Entgegenhaltungen:
- EP-A1- 0 690 278
- EP-A1- 1 464 665
- DE-A1- 19 542 442
- DE-A1-102006 050 336

## Beschreibung

Die Erfindung betrifft ein Verfahren zur Herstellung von Dispersionspulvern mittels Sprühtrocknung von wässrigen Polymerdispersionen und Zugabe von Antiblockmittel.

Dispersionspulver sind Polymerpulver, welche durch Sprühtrocknung der entsprechenden wässrigen Polymerdispersionen zugänglich sind. Dabei wird unterschieden zwischen Dispersionspulvern, welche in Wasser redispergierbar sind, und solchen die dieses Eigenschaftsbild nicht aufweisen. In Wasser redispergierbare Polymerpulver werden im Allgemeinen durch Trocknung der entsprechenden wässrigen Polymerdispersionen, in Gegenwart von einer Trocknungshilfe (im Allgemeinen ein Schutzkolloid) und von Antiblockmittel erhalten. Aufgrund des Schutzkolloidanteils wird zum Einen beim Trocknungsvorgang verhindert, dass die Polymerteilchen irreversibel verkleben, da die Polymerteilchen von den wasserlöslichen Schutzkolloid-Teilchen umhüllt werden. Zum Anderen bewirkt diese Schutzkolloid-Matrix, welche sich beim Dispergieren des Polymerpulvers in Wasser wieder auflöst, dass die Polymerpartikel wieder mit der Partikelgröße der Ausgangsdispersion in der wässrigen Redispersion vorliegen.

Zur Minimierung von Pulververblockungen, insbesondere bei Dispersionspulvern auf Basis von Polymerisaten mit einer Glasübergangstemperatur Tg von < 25°C, und zur Verbesserung der Rieselfähigkeit und Fließfähigkeit werden den Dispersionspulvern bei deren Herstellung Antiblockmittel (Antibackmittel) zugegeben.

Das Antiblockmittel (ABM) dient zur Sicherstellung der Rieselfähigkeit und der Lagerstabilität des nach Sprühtrocknung erhaltenen Polymerpulvers (Dispersionspulvers). Antiblockmittel sind insbesondere dann ein essentieller Bestandteil des Dispersionspulvers, wenn aufgrund einer niedrigen Glasübergangstemperatur des Polymers oder starker Hygroskopie Verblockungen des Pulvers bzw. Anbackungen an der Trocknerwand zu erwarten sind. Durch die Bepuderung der Teilchenoberfläche mit Antiblockmittel wird aufgrund geringerer Agglomeratbildung insbesondere auch der Anteil an Grobkorn vermindert, was sich sehr vorteilhaft auf den gesamten Trocknungsprozess sowie auf die Eigenschaften des Pulvers (z.B. Rieselfähigkeit und Lagerstabilität) auswirkt.

Derartige Dispersionspulver werden in vielerlei Anwendungen eingesetzt, unter anderem in Beschichtungsmitteln und in Klebemitteln für die unterschiedlichsten Substrate. Ein Beispiel ist die Verwendung als Bindepulver für partikuläre Naturmaterialien (Vinnex^{R}-Pulver der Wacker Chemie AG). Weit verbreitet ist deren Anwendung in bauchemischen Produkten, häufig in Verbindung mit mineralischen Bindemitteln (Vinnapas^{R}-Pulver der Wacker Chemie AG). Beispiele hierfür sind Baukleber insbesondere Fliesenkleber, Putze und Mörtelmassen, Farben, Spachtelmassen, Verlaufsmassen, Wärmedämmverbundsysteme und Fugenmörtel. Der Vorteil der in Wasser redispergierbaren Dispersionspulver liegt vor allem in der Möglichkeit sie in vorgefertigten, lagerfähigen Trockenmischungen einzusetzen, gegebenenfalls zusammen mit mineralischen Bindemitteln wie Zement, und diese erst unmittelbar vor der Verwendung durch Zugabe von Wasser gebrauchsfertig zu machen. Derartige Trockenmischungen können gegenüber pastösen Systemen leichter transportiert werden (ohne Wasseranteil) und bieten Vorteile bei der Lagerung, wie zum Beispiel Unempfindlichkeit gegenüber Frost sowie Resistenz gegenüber Mikrobenbefall.

In der DE-OS 2214410 wird empfohlen, das Antiblockmittel gleichzeitig mit, aber getrennt von der wässrigen Polymerdispersion, in trockener Form in den Sprühturm zu dosieren. Empfohlen werden Antiblockmittel mit einer mittleren Teilchengröße von 0,01 bis 0,5 µm, da die Einsatzmenge umso geringer ist, je feinteiliger die Antiblockmittel sind. In der DE 3101413 C2 wird hydrophobe Kieselsäure mit einer Teilchengröße von 10 bis 50 nm als Antiblockmittel empfohlen. Die Zugabe erfolgt während der Sprühtrocknung im Gemisch mit dem Trocknungsgas. In der EP 690278 A1 wird das Antiblockmittel mit dem Trocknungsgas unterhalb der Zerstäuberscheibe eines Scheibenzerstäubungstrockners eingetragen. In dem Verfahren aus der EP 1000113 B1 wird eine Mischung aus hydrophobem und hydrophilem Antiblockmittel während der Zerstäubung der Polymerdispersion trocken eingeblasen.

In der Praxis liegen die Antiblockmittel häufig in agglomerierter Form vor. Dies kann, etwa im Falle gefällter oder pyrogener Kieselsäuren, durch den Herstellprozess bedingt sein oder als Stoffeigenschaft vorliegen. In anderen Fällen, zum Beispiel bei der Verwendung von Kaolin, wird die Agglomeratform bei der Herstellung bewusst durch Sprühtrocknung einer wässrigen Suspension des Antiblockmittels erzeugt. Hierdurch erhält man gut rieselfähige Antiblockmittel, die sich problemlos fördern lassen sowie in Lagersilos keine Neigung zu Verblockungen oder Brückenbildung zeigen, was zu signifikanten Vorteilen im Prozessablauf führt. Ein weiterer Vorteil kann die höhere Schüttdichte der agglomerierten Antiblockmittel sein, was insbesondere im Logistikbereich von Vorteil ist. Solche Agglomerate, beispielsweise von Kaolin, haben im Allgemeinen eine Teilchengröße von 10 bis 250 µm, während die Primärteilchen etwa 0,01 bis 5 µm groß sind (mittlerer Partikel- bzw. Agglomerat-Durchmesser bestimmt mittels Lasergranulometrie oder Rasterelektronenmikroskopie REM). Antiblockmittel in agglomerierter Form werden auch mittels Extrusionsverfahren, beispielsweise durch Strangpressen einer hochkonzentrierten, wässrigen Suspension der Antiblockmittelteilchen und nachfolgender Trocknung, hergestellt. In diesem Fall besitzen die Agglomerate Teilchengrößen (mittlerer Agglomeratdurchmesser) im Allgemeinen von 5 mm bis zu 5 cm.

Aus Prozesssicht ist, wie erwähnt, die Verwendung des Antiblockmittels in agglomerierter Form vorzuziehen. Nachteilig an dieser Form ist jedoch, dass die Oberfläche des agglomerierten Antiblockmittels gegenüber den Primärteilchen verkleinert ist. Dies ist unabhängig davon, ob die Agglomeratform eine intrinsische Eigenschaft des Antiblockmittels ist oder bewusst vom Hersteller erzeugt wurde. Daher stehen weniger Antiblockmittelteilchen zur Bepuderung der Polymerpulver zur Verfügung, was das Antiblockmittel weniger effizient macht. Eine Möglichkeit wäre, das Antiblockmittel mittels einer Feststoffmühle zu mahlen und anschließend in den Trocknungsprozess einzubringen. Nachteilig hierbei ist die wiederum schlechtere Fließfähigkeit des gemahlenen Antiblockmittels, verbunden mit den bereits erwähnten Nachteilen im Prozess.

Es bestand somit die Aufgabe, ein Verfahren zur Verfügung zu stellen, mit welchem sich Dispersionspulver mit feinteiligen Antiblockmitteln ausstatten lassen, ohne dass dabei auf die Vorteile von Antiblockmitteln in agglomerierter Form bei deren Lagerung und bei deren Handhabung und Verarbeitung verzichtet werden muss.

Gegenstand der Erfindung ist ein Verfahren zur Herstellung von Dispersionspulvern mittels Sprühtrocknung von wässrigen Polymerdispersionen und Zugabe von Antiblockmittel, dadurch gekennzeichnet, dass in agglomerierter Form vorliegende Antiblockmittel mit einer Teilchengröße von 10 µm bis 250 µm, oder mit einer Teilchengröße von 5 mm bis 5 cm im Falle von Agglomeraten in Form von Extrudaten, ganz oder teilweise mittels eines Fördergases in die Sprühtrocknung zugeführt werden und auf eine Teilchengröße von 0,01 µm bis 5 µm, oder im Falle von Extrudaten auf eine Teilchengröße von 2 µm bis 60 µm, zerkleinert werden.

Die Basispolymerisate für die Dispersionspulver werden zur Sprühtrocknung in Form deren wässrigen Polymerdispersionen eingebracht. Geeignete Basispolymerisate für die Dispersionspulver sind solche auf Basis von einem oder mehreren ethylenisch ungesättigten Monomeren ausgewählt aus der Gruppe umfassend Vinylester von Carbonsäuren mit 1 bis 15 C-Atomen, Methacrylsäureester oder Acrylsäureester von Carbonsäuren mit unverzweigten oder verzweigten Alkoholen mit 1 bis 15 C-Atomen, Olefine oder Diene, Vinylaromaten oder Vinylhalogenide.

Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von alpha-verzweigten Monocarbonsäuren mit 5 bis 13 C-Atomen, beispielsweise VeoVa9^{R} oder VeoVa10^{R} (Handelsnamen der Firma Momentive). Besonders bevorzugt ist Vinylacetat.

Bevorzugte Methacrylsäureester oder Acrylsäureester sind Ester von unverzweigten oder verzweigten Alkoholen mit 1 bis 15 C-Atomen wie Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat. Besonders bevorzugt sind Methylacrylat, Methylmethacrylat, n-Butylacrylat und 2-Ethylhexylacrylat.

Bevorzugte Olefine oder Diene sind Ethylen, Propylen und 1,3-Butadien. Bevorzugte Vinylaromaten sind Styrol und Vinyltoluol. Ein bevorzugtes Vinylhalogenid ist Vinylchlorid.

Gegebenenfalls können noch 0,05 bis 50 Gew.-%, vorzugsweise 1 bis 10 Gew.-%, bezogen auf das Gesamtgewicht des Basispolymerisats, Hilfsmonomere copolymerisiert werden. Beispiele für Hilfsmonomere sind ethylenisch ungesättigte Mono- und Dicarbonsäuren, ethylenisch ungesättigte Carbonsäureamide, ethylenisch ungesättigte Sulfonsäuren bzw. deren Salze, vorvernetzende Comonomere wie mehrfach ethylenisch ungesättigte Comonomere, nachvernetzende Comonomere wie N-Methylolacrylamid, epoxidfunktionelle Comonomere, siliciumfunktionelle Comonomere.

Beispiele für geeignete Homo- und Mischpolymerisate sind Vinylacetat-Homopolymerisate, Mischpolymerisate von Vinylacetat mit Ethylen, Mischpolymerisate von Vinylacetat mit Ethylen und einem oder mehreren weiteren Vinylestern, Mischpolymerisate von Vinylacetat mit einem oder mehreren weiteren Vinylestern, Mischpolymerisate von Vinylacetat mit Ethylen und Acrylsäureester, Mischpolymerisate von Vinylacetat mit Ethylen und Vinylchlorid, Mischpolymerisate von Vinylchlorid und Ethylen und gegebenenfalls einem oder mehreren weiteren Vinylestern, Styrol-Acrylsäureester-Copolymerisate, Styrol-1,3-Butadien-Copolymerisate.

Bevorzugt werden Vinylacetat-Homopolymerisate; Mischpolymerisate von Vinylacetat mit 1 bis 50 Gew.-% von einem oder mehreren weiteren Comonomeren aus der Gruppe der Vinylester mit 1 bis 12 C-Atomen im Carbonsäurerest wie Vinylpropionat, Vinyllaurat, Vinylester von alpha-verzweigten Carbonsäuren mit 5 bis 13 C-Atomen wie VeoVa9^{R}, VeoVa10^{R}, VeoVall^{R}; Mischpolymerisate von Vinylacetat mit 1 bis 40 Gew.-% Ethylen; Mischpolymerisate von Vinylacetat mit 1 bis 40 Gew.-% Ethylen und 1 bis 50 Gew.-% von einem oder mehreren weiteren Comonomeren aus der Gruppe der Vinylester mit 1 bis 12 C-Atomen im Carbonsäurerest wie Vinylpropionat, Vinyllaurat, Vinylester von alpha-verzweigten Carbonsäuren mit 5 bis 13 C-Atomen wie VeoVa9^{R}, VeoVa10^{R}, VeoVa11^{R}; Mischpolymerisate von Vinylacetat, 1 bis 40 Gew.-% Ethylen und vorzugsweise 1 bis 60 Gew.-% (Meth)-Acrylsäureester von unverzweigten oder verzweigten Alkoholen mit 1 bis 15 C-Atomen, insbesondere Methylmethacrylat, Methylacrylat, n-Butylacrylat oder 2-Ethylhexylacrylat; und Mischpolymerisate mit 30 bis 75 Gew.-% Vinylacetat, 1 bis 30 Gew.-% Vinyllaurat oder Vinylester einer alpha-verzweigten Carbonsäure mit 5 bis 13 C-Atomen, sowie 1 bis 30 Gew.-% (Meth)Acrylsäureester von unverzweigten oder verzweigten Alkoholen mit 1 bis 15 C-Atomen, insbesondere Methylmethacrylat, Methylacrylat, n-Butylacrylat oder 2-Ethylhexylacrylat, welche noch 1 bis 40 Gew.-% Ethylen enthalten können; Mischpolymerisate mit einem oder mehreren Vinylestern mit 1 bis 12 C-Atomen im Carbonsäurerest wie Vinylacetat, Vinylpropionat, Vinyllaurat, Vinylester von alpha-verzweigten Carbonsäuren mit 5 bis 13 C-Atomen wie VeoVa9^{R}, VeoVa10^{R}, VeoVa11^{R}, 1 bis 40 Gew.-% Ethylen und 1 bis 60 Gew.-% Vinylchlorid; wobei die Polymerisate jeweils noch die genannten Hilfsmonomere in den genannten Mengen enthalten können, und sich die Angaben in Gew.-% auf jeweils 100 Gew.-% aufaddieren.

Bevorzugt werden auch (Meth)acrylsäureester-Polymerisate, wie Mischpolymerisate von n-Butylacrylat oder 2-Ethylhexylacrylat oder Copolymerisate von Methylmethacrylat mit n-Butylacrylat und/oder 2-Ethylhexylacrylat und gegebenenfalls Ethylen; Styrol-Acrylsäureester-Copolymerisate mit einem oder mehreren Monomeren aus der Gruppe Methylacrylat, Ethylacrylat, Propylacrylat, n-Butylacrylat, 2-Ethylhexylacrylat; Styrol-1,3-Butadien-Copolymerisate; wobei die Polymerisate noch die genannten Hilfsmonomere in den genannten Mengen enthalten können, und sich die Angaben in Gew.-% auf jeweils 100 Gew.-% aufaddieren.

Die Monomerauswahl bzw. die Auswahl der Gewichtsanteile der Comonomere erfolgt dabei so, dass im Allgemeinen eine Glasübergangstemperatur Tg von -50°C bis +50°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise voraus berechnet werden. Nach Fox T. G., Bull. Am. Physics Soc. 1, 3, page 123 (1956) gilt: 1/Tg = x₁/Tg₁ + x₂/Tg₂ + ... + xₙ/Tgₙ, wobei xₙ für den Massebruch (Gew.-%/100) des Monomeren n steht, und Tgₙ die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Herstellung der Basispolymerisate erfolgt vorzugsweise nach dem Emulsionspolymerisationsverfahren. Die Polymerisationstemperatur ist vorzugsweise zwischen 40°C und 100°C, besonders bevorzugt zwischen 60°C und 90°C. Bei der Copolymerisation von gasförmigen Comonomeren wie Ethylen, 1,3-Butadien oder Vinylchlorid kann auch unter Druck, im Allgemeinen zwischen 5 bar und 100 bar, gearbeitet werden.

Die Initiierung der Polymerisation erfolgt vorzugsweise mit den für die Emulsionspolymerisation gebräuchlichen wasserlöslichen Initiatoren oder Redox-Initiator-Kombinationen.

Die Polymerisation erfolgt in Gegenwart von Schutzkolloiden und/oder Emulgatoren. Geeignete Schutzkolloide für die Polymerisation sind Polyvinylalkohole; Polyvinylacetale; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate, Dextrine und Cyclodextrine; Proteine wie Kasein oder Kaseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)-acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere. Bevorzugt werden teilverseifte oder vollverseifte Polyvinylalkohole mit einem Hydrolysegrad von 80 bis 100 Mol-%, insbesondere teilverseifte Polyvinylalkohole mit einem Hydrolysegrad von 80 bis 95 Mol-% und einer Höpplerviskosität, in 4 %-iger wässriger Lösung von 1 bis 30 mPas (Methode nach Höppler bei 20°C, DIN 53015) verwendet.

Wird in Gegenwart von Emulgatoren polymerisiert, beträgt deren Menge 1 bis 5 Gew.-% bezogen auf die Monomermenge. Geeignete Emulgatoren sind sowohl anionische, kationische als auch nichtionische Emulgatoren, beispielsweise anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit 8 bis 40 Ethylenoxid-Einheiten.

Nach Abschluss der Polymerisation kann zur Restmonomerentfernung in Anwendung bekannter Methoden nachpolymerisiert werden, im Allgemeinen durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden.

Die damit erhältlichen wässrigen Polymerdispersionen haben einen Feststoffgehalt von 30 bis 75 Gew.-%, vorzugsweise von 50 bis 60 Gew.-%.

Das Herstellungsverfahren der Polymerdispersion wird beispielsweise in der EP 1916275 A1 beschrieben, deren diesbezügliche Angaben Teil der Anmeldung sind (incorporated here by reference).

Zur Herstellung der Dispersionspulver werden die wässrigen Dispersionen in Gegenwart von Antiblockmittel, gegebenenfalls nach Zusatz von Schutzkolloiden als Trocknungshilfe zur Polymerdispersion, mittels Sprühtrocknung getrocknet. In der Regel wird die Trocknungshilfe (Schutzkolloid) in einer Gesamtmenge von 0,5 bis 30 Gew.-%, bezogen auf die polymeren Bestandteile der Dispersion, eingesetzt. Geeignete Trocknungshilfen sind die vorher als Schutzkolloide aufgezählten Substanzen. Als weitere Bestandteile der Dispersionspulver können der Polymerdispersion weitere Additive zugesetzt werden, wie zum Beispiel Entschäumer, Hydrophobierungsmittel und rheologische Additive. Die mit Schutzkolloid und gegebenenfalls weiteren Additiven modifizierte Polymerdispersion, das heißt die zu trocknende Mischung aus Polymerdispersion, Schutzkolloid und gegebenenfalls weiteren Additiven bezeichnet man im Fachjargon auch als "Speise" oder "Feed".

Geeignete Antiblockmittel (Antibackmittel) sind dem Fachmann bekannt, beispielsweise Aluminiumsilikate wie Kaolin, Bentonit, pyrogene Kieselsäure oder gefällte Kieselsäure, welche gegebenenfalls hydrophobiert sein können, Talkum, Tone, Leichtspat, Carbonate wie Calciumcarbonat, Magnesiumcarbonat und Ca/Mg-Carbonat, Bariumsulfat. Es können auch Gemische von Antiblockmitteln eingesetzt werden. Die Antiblockmittel werden im Allgemeinen in einer Menge von 0,1 bis 30 Gew.-%, vorzugsweise 2 bis 30 Gew.-%, besonders bevorzugt 7 bis 30 Gew.-%, jeweils bezogen auf das Gesamtgewicht der polymeren Bestandteile der zu zerstäubenden Polymerdispersion eingesetzt. Im Falle von pyrogener Kieselsäure oder gefällter Kieselsäure werden vorzugsweise 0,1 bis 2 Gew.-%, bezogen auf die polymeren Bestandteile der zu zerstäubenden Polymerdispersion, eingesetzt. Der Anteil der polymeren Bestandteile der zu zerstäubenden Polymerdispersion setzt sich zusammen aus dem Basispolymerisat der Polymerdispersion und dem Schutzkolloidanteil.

Mittels Extrusion hergestellte Antiblockmittel-Agglomerate liegen im Allgemeinen in Teilchengrößen von 5 mm bis 5 cm vor, während nicht extrudierte Antiblockmittel im Allgemeinen als Agglomerate mit einer Teilchengröße von 10 µm bis 250 µm in den Handel kommen. Die Teilchengröße bei den Extrudaten mit einer Teilchengröße von im Allgemeinen von 5 mm bis 5 cm kann mittels Lineal oder Schublehre gemessen werden, wobei als Teilchengröße die Länge der Extrudate gemessen wird. Die Teilchengröße von Agglomeraten im µm-Bereich kann mittels Lasergranulometrie gemessen werden und wird als mittlerer Agglomerat-Durchmesser angegeben. Der mittlere Agglomerat-Durchmesser kann über eine Streulichtmessung in einem Beckman Coulter LS 130 Laserpartikelanalysator mit den trockenen Agglomeraten ermittelt werden. Die Vorteile der Agglomeratform liegen, wie bereits erwähnt, in einer besseren Förderbarkeit und Rieselfähigkeit, weniger Brückenbildung und Verblockung in Silos sowie unter Umständen in einer höheren Schüttdichte der Antiblockmittel.

Die Sprühtrocknung erfolgt in üblichen Sprühtrocknungsanlagen (Zerstäubungstrocknern), bei denen die Energie zur Verdampfung der wässrigen Phase durch Wärmeleitung aus dem Trocknungsgas auf die zu trocknende Polymerdispersion (Speise) übertragen wird. Die Trocknung erfolgt durch innige Vermischung der versprühten Polymerdispersion mit dem Trocknungsgas. Als Trocknungsgas wird im Allgemeinen Luft eingesetzt.

Zur Beschleunigung der Trocknung wird das Trocknungsgas vorerwärmt, vorzugsweise auf eine Eintrittstemperatur von 130°C bis 210°C (Heißluft). Vorzugsweise wird auch die zu trocknende Polymerdispersion (Speise) vorerwärmt, im Allgemeinen auf eine Speisetemperatur von 50°C bis 98°C. Die Sprühtrocknung erfolgt nach dem Gleichstromprinzip oder Gegenstromprinzip. Die Polymerdispersion (Speise) wird beim bevorzugten Gleichstromprinzip im Allgemeinen am oberen Ende des Trockners mittels einer Einstoffdüse unter Druck, im Allgemeinen 25 bis 100 bar, zerstäubt oder zusammen mit Pressluft (Druck 2 bis 10 bar) über eine Zweistoffdüse oder Mehrstoffdüse zerstäubt oder über eine Zerstäuberscheibe (Rotationszerstäuber) zerstäubt. Die Polymerdispersion und das Trocknungsgas werden am oberen Ende des Sprühtrockners, im Allgemeinen ein zylinderförmiger Turm (Trocknerturm) mit einem Volumen von bis zu mehreren hundert Kubikmetern, zugeführt. Am unteren Ende wird das getrocknete Polymerpulver mit dem Trocknungsgas ausgetragen und mittels eines Filterabscheiders und/oder Zyklonabscheiders isoliert. Die Austrittstemperatur des Trocknungsgases beträgt etwa 45°C bis 120°C, je nach Anlage, Tg des Harzes und gewünschtem Trocknungsgrad.

Die Zugabe des Antiblockmittels erfolgt kontinuierlich und zeitgleich, aber räumlich getrennt von der zu zerstäubenden Polymerdispersion (Speise). Dazu wird das Antiblockmittel ganz oder teilweise in einer Förderleitung mittels eines Fördergases, im Allgemeinen Luft (Förderluft), in den Trocknerturm gefördert. Die Fördergasgeschwindigkeit beträgt im Allgemeinen 20 bis 50 m/s, vorzugsweise 30 bis 50 m/s. Alternativ dazu kann das Antiblockmittel auch ganz oder teilweise über die genannte Förderleitung der zur Trocknung zugeführten Heißluft im Heißluftkanal zugegeben werden. Im Allgemeinen wird ein Anteil von 50 bis 100 Gew.-% des in agglomerierter Form vorliegenden Antiblockmittels der Sprühtrocknung zugeführt, vorzugsweise ein Anteil von 80 bis 100 Gew.-%, am meisten bevorzugt etwa 100 Gew.-%. Der Anteil an Antiblockmittel, welcher nicht der Sprühtrocknung zugeführt wird, kann dem getrockneten Dispersionspulver nachträglich zugegeben werden.

Die Zerkleinerung des Antiblockmittels kann in der Förderleitung mittels einer Prallmühle (Wirbelstrommühle) erfolgen, wobei der Mahlschritt des mit Fördergas geförderten Antiblockmittels in-line in der Förderleitung erfolgt. Solche Prallmühlen sind im Handel erhältlich, beispielsweise von der Firma Grenzebach Maschinenbau GmbH. Der Einsatz einer Prallmühle wird besonders dann bevorzugt, wenn das Fördergas zur Förderung des Antiblockmittels mit relativ niederer Fördergasgeschwindigkeit, vorzugsweise < 20 m/s, besonders bevorzugt < 15 m/s, eingebracht wird, beispielsweise mittels Ventilatorförderung.

Alternativ dazu kann die Deagglomeration des Antiblockmittels dadurch erfolgen, dass man das Antiblockmittel auf eine oder mehrere Prallplatten lenkt. Die Prallplatten können in der Antiblockmittel-Förderleitung und/oder im Heißluftkanal zur Zuführung des Trockengases und/oder im Trockenturm angebracht werden. Die Geometrie der Prallplatte(n) ist dabei dem Trockner angepasst und dem Zerstäubungsverfahren angepasst. Die Prallplatten können beispielsweise rechteckige, kreisförmige oder ringförmige Geometrie haben. Sie können flach oder gekrümmt sein. Prallplatten sind im Allgemeinen aus Metall (Stahl) gefertigt. Die Dimensionierung wird so gewählt, dass der zugeführte Antiblockmittel-Luft-Strom möglichst vollständig auf die Prallplatte(n) trifft. Bevorzugt werden eine oder mehrere senkrecht angestrahlte, kreisförmige Prallplatten. Durch den so erzeugten Impuls werden die Antiblockmittel-Agglomerate zerstört, das Antiblockmittel wird fein verteilt und liegt erst unmittelbar vor Kontakt mit dem Spray (Speisetropfen) in Form der Primärpartikel vor. Dadurch erhält man zugleich die Vorteile von guter Förderbarkeit und großer Oberfläche des deagglomerierten Antiblockmittels, die für eine effektive Belegung der Pulverteilchen notwendig ist.

Eine weitere Alternative zur Deagglomerierung des Antiblockmittels ist eine Venturi-Düse in der Förderleitung des Antiblockmittels, in der die zur Deagglomeration erforderliche Energie in Form von Scherkräften, durch hohe Luftgeschwindigkeiten erzeugt wird. Dazu wird das Fördergas (Förderluft) in die Venturidüse eingespeist und das Antiblockmittel simultan in die Venturi-Düse eingespeist.

Die genannten Verfahrensvarianten zur Deagglomerierung können auch in beliebiger Art und Weise miteinander kombiniert werden.

Vorzugsweise beträgt die Teilchengröße des Antiblockmittels nach dem Deagglomerationsschritt 0,01 bis 5 µm, besonders bevorzugt 0,05 bis 1 µm, jeweils mittlerer Teilchendurchmesser. Im Falle von Extrudaten wird vorzugsweise auf eine Teilchengröße von 2 bis 60 µm deagglomeriert (zerkleinert). Die Teilchengröße des Antiblockmittels nach dem Deagglomerierungsschritt kann mittels Lasergranulometrie gemessen werden und wird als mittlerer Teilchendurchmesser angegeben. Der mittlere Teilchendurchmesser kann über eine Streulichtmessung in einem Beckman Coulter LS 230 Laserpartikelanalysator mit den in Wasser suspendierten Antiblockmittel-Teilchen ermittelt werden. Die Teilchengröße kann auch mittels Rasterelektronenmikroskopie (REM) abgeschätzt werden.

Mit dem erfindungsgemäßen Verfahren wird angestrebt, dass die Agglomerate zu möglichst hohen Anteilen deagglomeriert werden. Es sollten mindesten 50 Gew.-% der Agglomerate deagglomeriert werden, vorzugsweise 80 bis 100 Gew.-%, am meisten bevorzugt etwa 100 Gew.-%.

Es kann auch so vorgegangen werden, dass bei der Trocknung der entsprechenden wässrigen Polymerdispersionen ein oder mehrere in Agglomeratform vorliegende Antiblockmittel mit einem oder mehreren nicht agglomerierten Antiblockmitteln zur Sprühtrocknung zugeführt werden. Diese Maßnahme kann gegebenenfalls die Deagglomerierung unterstützen, beispielsweise beim Einsatz einer Prallplatte.

In nicht agglomerierter Form vorliegendes Antiblockmittel kann auch nach der Sprühtrocknung dem trockenen Polymerpulver zugegeben werden. Beispielsweise kann diese Zugabe nach der Pulverabtrennung von der Trocknungsluft erfolgen, beispielsweise nach der Filterabscheidung und/oder Zyklonabscheidung.

Bei Trocknern mit Rotationszerstäubern (Rotationszerstäubungs-Trocknern, Scheibentrockner) ist die Aufgabe des Antiblockmittels in die Trocknungsluft (Heißluft) bevorzugt. Dies gilt insbesondere für Sprühtrockner mit sehr hohen Durchsätzen, da bei einer hohen Beladung des Trockners eine homogene Verteilung des Antiblockmittels über eine Dosierung an der Trocknerwand oder an der Trocknerdecke erschwert ist.

Die nachfolgenden Beispiele dienen der weiteren Erläuterung der Erfindung:

### Beispiel 1:

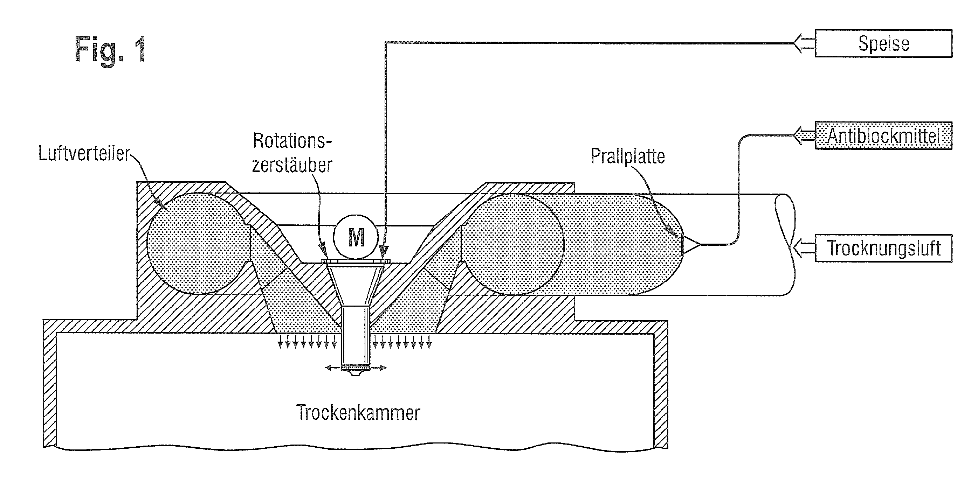

In einem handelsüblichen Sprühtrocknungsturm mit eingebautem Rotationszerstäuber (Rotationszerstäubungs-Trockner) mit einer Lochscheibe (Zerstäuberscheibe) analog Abbildung 1 (Volumen des Sprühtrocknungsturms ca. 500 m³, Speiserate ca. 4200 kg/h, Umfangsgeschwindigkeit der Zerstäuberscheibe ca. 140 m/s, Trocknungsluftmenge ca. 50000 m³/h, Fördergasgeschwindigkeit ABM 40 m/s, Trocknungslufteintrittstemperatur ca. 160°C, Trocknungsluftaustrittstemperatur ca. 80°C) wurde eine wässrige Vinylacetat/Ethylen-Dispersion (Polymerzusammensetzung 80 Gew.-% Vinylacetat und 20 Gew.-% Ethylen, Festgehalt der Dispersion 52 Gew.-%) nach Zugabe von 10 Gew.-%, bezogen auf Copolymer, einer wässrigen Polyvinylalkohollösung mit einer Höppler-Viskosität von 4 mPas (in 4 %-iger wässriger Lösung, Methode nach Höppler bei 20°C, DIN 53015) und einem Hydrolysegrad von 88 Mol-% sprühgetrocknet. Hierbei wurde mittels Verdünnungswasser die Speiseviskosität auf 400 bis 500 mPas eingestellt (gemessen bei 20°C mittels Rotationsviskosimeter bei 20 U/min). Die Speise wurde auf 95°C vorgewärmt. In den Heißluftkanal des Trockners wurde während der gesamten Sprühtrocknung ein 1:1-Gemisch aus Kaolin (Burgess No.-20-SD^{R}) und Calciumcarbonat (Omyacarb^{R} 5GU) in einer Menge von insgesamt 10 Gew.-%, bezogen auf Copolymer und Polyvinylalkohol, dosiert, und zwar so, dass dieses Gemisch auf eine im Heißluftkanal befindliche Prallplatte (kreisförmige Stahlplatte mit 15 cm Durchmesser) gelenkt wurde (siehe Abbildung 1). Das Kaolin lag hierbei in Form sprühgetrockneter Agglomerate mit einer mittleren Agglomeratgröße von 100 µm vor (bestimmt mittels Lasergranulometrie). Das Calciumcarbonat lag in nichtagglomerierter Form mit einer mittleren Teilchengröße von 5 µm vor.

Die Sprühtrocknung erfolgte über 2 Tage hinweg problemlos und lieferte ein frei fließendes, blockstabiles Pulver. Es wurden keine Anbackungen an der Trocknerwand beobachtet. Die Menge an Überkorn, welches als Pulverteilchen größer 1000 µm (solche, welche von einem Sieb mit einer Maschenweite von 1000 µm zurückgehalten werden) definiert wurde, lag bei 0,5 Gew.-%, bezogen auf die Gesamtausbeute an Polymerpulver.
Mittels Rasterelektronenmikroskopie konnte verifiziert werden, dass das Kaolin die Teilchenoberfläche des Polymerpulvers effektiv belegt. Das Kaolin lag in Form von Primärteilchen mit einer Teilchengröße von ca. 0,5 bis 1 µm (abgeschätzt aus REM-Aufnahmen).

### Vergleichsbeispiel 1:

Es wurde wie in Beispiel 1 vorgegangen, nur dass die im Heißluftkanal befindliche Prallplatte demontiert wurde.

Die Sprühtrocknung konnte zwar immer noch unterbrechungsfrei über den Zeitraum von 2 Tagen durchgeführt werden, jedoch lag die Menge an Überkorn (Pulverteilchen größer 1000 µm) bei 3,1 Gew.-%. Weiterhin zeigte eine Inspektion des Trockners nach Trocknungsende eine deutliche Wandbelegung.
Die Rasterelektronenmikroskopie zeigte eine deutlich schlechtere Belegung der Teilchenoberfläche des Polymerpulvers mit Antiblockmittel. Es lagen viele Kaolinagglomerate mit Teilchengrößen von mindestens 20 µm vor (abgeschätzt aus REM-Aufnahmen).

### Vergleichsbeispiel 2:

Es wurde wie in Beispiel 1 vorgegangen, nur dass das Kaolin bereits in gemahlener Form verwendet wurde und die Prallplatte demontiert wurde.

Die Trocknung lief über 2 Tage problemlos und liefert frei fließende, blockstabile Pulver. Die Menge an Überkorn (Pulverteilchen größer 1000 µm) lag bei 0,7 Gew.-%, bezogen auf die Gesamtausbeute an Polymerpulver.
Als nachteilig an dieser Vorgehensweise erwies sich eine starke Brückenbildung des gemahlenen Kaolins im Lagersilo, die eine häufige mechanische Auflockerung notwendig machte. Weiterhin stellte sich die Förderbarkeit des Kaolins mittels Schneckendosierung als schwierig heraus, was zu einer weniger konstanten Dosierrate und daher höherer Überwachungstätigkeit führte.

### Beispiel 2:

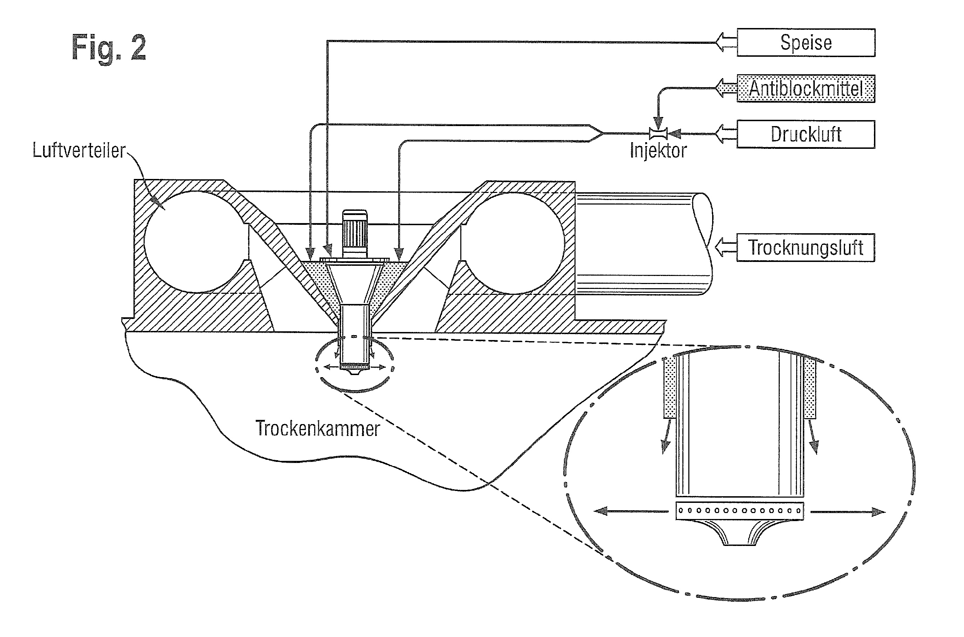

Es wurde wie in Beispiel 1 vorgegangen, nur dass während der Sprühtrocknung sowohl hochdisperse Kieselsäure (HDK^{R} H20) als auch Calciumcarbonat (Omyacarb^{R} 5GU) zugegeben wurden. Die Kieselsäure lag hierbei in Form von Agglomeraten mit einer mittleren Agglomeratgröße von 10 bis 250 µm vor. Das Calciumcarbonat lag in nichtagglomerierter Form mit einer mittleren Teilchengröße von 5 µm vor. Jeweils bestimmt mittels Lasergranulometrie.
Die Sprühtrocknung erfolgte in dem Sprühtrocknungsturm mit eingebautem Rotationszerstäuber (Rotationszerstäubungs-Trockner) aus Beispiel 1. Im Unterschied zu Beispiel 1 wurde auf den Einbau der Prallplatte im Trocknungsluftkanal verzichtet. Die Druckluft (Fördergas) wurde über eine Venturi-Düse zugeführt, in welche auch die Kieselsäure von oben zugegeben wurde (siehe Abbildung 2). Die Kieselsäure wurde dabei in der Antiblockmittel-Förderleitung deagglomeriert und über einen Ringspalt, der über der Zerstäuberscheibe angeordnet war und einen vertikalen Abstand zur Zerstäuberscheibe von 40 cm sowie eine Spaltbreite von 4 cm hatte, in den Sprühtrockner eingebracht (siehe Abbildung 2). Der Ringspalt wurde durch ein zylindrisch angeordnetes Stahlblech gebildet, welches das Zerstäubergehäuse vollständig umschließt. Das Calciumcarbonat wurde, wie in Beispiel 1, über den Heißluftkanal in den Trockner dosiert. Die Dosierung von hochdisperser Kieselsäure und von Calciumcarbonat erfolgte so, dass im Endprodukt ein 1:20 Gemisch aus hochdisperser Kieselsäure und Calciumcarbonat in einer Menge von 10 Gew.-%, bezogen auf Copolymer und Polyvinylalkohol, enthalten war.

Die Sprühtrocknung erfolgte über 2 Tage hinweg problemlos und lieferte ein frei fließendes, blockstabiles Pulver. Es wurden keine bzw. nur sehr wenige Anbackungen an der Trocknerwand beobachtet. Die Menge an Überkorn, welches als Pulverteilchen größer 1000 µm definiert wird, lag bei 0,1 Gew.-%, bezogen auf die Gesamtausbeute an Polymerpulver.
Mittels Rasterelektronenmikroskopie konnte verifiziert werden, dass die Kieselsäure die Teilchenoberfläche effektiv belegt. Die Kieselsäure lag in Form von Primärteilchen mit einer Teilchengröße von circa 200 nm vor (abgeschätzt aus REM-Aufnahmen).

### Vergleichsbeispiel 3:

Es wurde wie in Beispiel 2 vorgegangen, nur dass die Venturidüse demontiert wurde.

Die Sprühtrocknung konnte zwar immer noch 2 Tage unterbrechungsfrei durchgeführt werden, jedoch lag die Menge an Überkorn (Pulverteilchen größer 1000 µm) bei 2,5 Gew.-%. Weiterhin zeigte eine Inspektion des Trockners nach Trocknungsende eine deutlich stärkere Wandbelegung, verglichen mit Beispiel 2.
Die Rasterelektronenmikroskopie zeigte eine deutlich schlechtere und ungleichmäßigere Belegung der Teilchenoberfläche des Polymerpulvers mit Antiblockmittel. Es lagen viele Agglomerate der Kieselsäure mit Durchmessern von deutlich über 20 µm vor (abgeschätzt aus REM-Aufnahmen).

All diese Beispiele machen deutlich, dass eine effiziente Zerstörung der Antiblockmittel-Agglomerate essentiell für einen störungsfrei ablaufenden Trocknungsprozess und eine zufriedenstellende Pulverqualität ist.

## Patentansprüche

1. Verfahren zur Herstellung von Dispersionspulvern mittels Sprühtrocknung von wässrigen Polymerdispersionen und Zugabe von Antiblockmittel, **dadurch gekennzeichnet, dass** in agglomerierter Form vorliegende Antiblockmittel mit einer Teilchengröße von 10 µm bis 250 µm, oder mit einer Teilchengröße von 5 mm bis 5 cm im Falle von Agglomeraten in Form von Extrudaten, ganz oder teilweise mittels eines Fördergases in die Sprühtrocknung zugeführt werden und auf eine Teilchengröße von 0,01 µm bis 5 µm, oder im Falle von Extrudaten auf eine Teilchengröße von 2 µm bis 60 µm, zerkleinert werden.

2. Verfahren nach Anspruch 1, **dadurch gekennzeichnet, dass** die Zerkleinerung des Antiblockmittels durch eine in der Förderleitung eingebaute Prallmühle erfolgt.

3. Verfahren nach Anspruch 1, **dadurch gekennzeichnet, dass** die Zerkleinerung des Antiblockmittels dadurch erfolgt, dass das mit Antiblockmittel beladene Fördergas auf eine oder mehrere Prallplatten gelenkt wird.

4. Verfahren nach Anspruch 3, **dadurch gekennzeichnet, dass** die Prallplatte(n) in der Antiblockmittel-Förderleitung, im Heißluftkanal und/oder im Trockenturm angebracht wird bzw. werden.

5. Verfahren nach Anspruch 1, **dadurch gekennzeichnet, dass** die Zerkleinerung des Antiblockmittels in einer VenturiDüse erfolgt.

6. Verfahren nach Anspruch 1, **dadurch gekennzeichnet, dass** die in Anspruch 2 bis 5 genannten Zerkleinerungsverfahren in beliebiger Kombination durchgeführt werden.

7. Verfahren nach Anspruch 1 bis 6, **dadurch gekennzeichnet, dass** das Antiblockmittel ganz oder teilweise in einer Förderleitung in den Trocknerturm gefördert wird.

8. Verfahren nach Anspruch 1 bis 6, **dadurch gekennzeichnet, dass** das Antiblockmittel ganz oder teilweise über eine Förderleitung der zur Trocknung zugeführten Heißluft im Heißluftkanal zugegeben wird.

9. Verfahren nach Anspruch 1 bis 8, **dadurch gekennzeichnet, dass** ein oder mehrere in Agglomeratform vorliegende Antiblockmittel im Gemisch mit einem oder mehreren nicht agglomerierten Antiblockmitteln der Sprühtrocknung zugeführt werden.

10. Verfahren nach Anspruch 1 bis 8, **dadurch gekennzeichnet, dass** ein oder mehrere in nicht agglomerierter Form vorliegende Antiblockmittel nach der Sprühtrocknung dem trockenen Polymerpulver zugegeben werden.

## Claims

1. Process for producing dispersion powders by means of spray-drying of aqueous polymer dispersions and addition of antiblocking agent, **characterized in that** antiblocking agents present in agglomerated form and having a particle size of 10 µm to 250 µm, or having a particle size of 5 mm to 5 cm in the case of agglomerates in the form of extrudates, are supplied to the spray-drying wholly or partly by means of a conveying gas and are comminuted to a particle size of 0.01 µm to 5 µm or, in the case of extrudates, to a particle size of 2 µm to 60 µm.

2. Process according to Claim 1, **characterized in that** the comminution of the antiblocking agent is effected by means of an impact mill installed in the conveying line.

3. Process according to Claim 1, **characterized in that** the comminution of the antiblocking agent is effected by directing the conveying gas laden with antiblocking agent onto one or more impact plates.

4. Process according to Claim 3, **characterized in that** the impact plate(s) is/are mounted in the antiblocking agent conveying line, in the hot air channel and/or in the drying tower.

5. Process according to Claim 1, **characterized in that** the comminution of the antiblocking agent is effected in a Venturi nozzle.

6. Process according to Claim 1, **characterized in that** the comminution methods specified in Claims 2 to 5 are performed in any combination.

7. Process according to Claim 1 to 6, **characterized in that** all or some of the antiblocking agent is conveyed into the dryer tower in a conveying line.

8. Process according to Claim 1 to 6, **characterized in that** all or some of the antiblocking agent is added via a conveying line to the hot air supplied for drying in the hot air channel.

9. Process according to Claim 1 to 8, **characterized in that** one or more antiblocking agents present in agglomerate form is/are supplied to the spray-drying in a mixture with one or more nonagglomerated antiblocking agents.

10. Process according to Claim 1 to 8, **characterized in that** one or more antiblocking agents present in nonagglomerated form is/are added to the dry polymer powder after the spray-drying.

## Revendications

1. Procédé pour la préparation de poudres de dispersion par séchage par pulvérisation de dispersions aqueuses de polymères et addition d'agents antiadhérents, **caractérisé en ce que** des agents antiadhérents se trouvant sous forme agglomérée, d'une grosseur de particule de 10 µm à 250 µm, ou d'une grosseur de particule de 5 mm à 5 cm dans le cas d'agglomérats sous forme de produits extrudés, sont introduits dans le séchage par pulvérisation, totalement ou partiellement à l'aide d'un gaz de transport et sont broyés à une grosseur de particule de 0,01 µm à 5 µm, ou, dans le cas de produits extrudés, à une grosseur de particule de 2 µm à 60 µm.

2. Procédé selon la revendication 1, **caractérisé en ce que** le broyage de l'agent antiadhérent a lieu par un broyeur à percussion monté dans la conduite de transport.

3. Procédé selon la revendication 1, **caractérisé en ce que** le broyage de l'agent antiadhérent a lieu **en ce que** le gaz de transport chargé d'agent antiadhérent est dévié sur une ou plusieurs tôles déflectrices.

4. Procédé selon la revendication 3, **caractérisé en ce que** la ou les tôles déflectrice(s) est/sont disposée(s) dans la conduite de transport de l'agent antiadhérent, dans le canal d'air chaud et/ou dans la tour de séchage.

5. Procédé selon la revendication 1, **caractérisé en ce que** le broyage de l'agent antiadhérent a lieu dans une buse de venturi.

6. Procédé selon la revendication 1, **caractérisé en ce que** les procédés de broyage mentionnés dans la revendication 2 à 5 sont réalisés dans une combinaison quelconque.

7. Procédé selon la revendication 1 à 6, **caractérisé en ce que** l'agent antiadhérent est transporté totalement ou partiellement dans une conduite de transport dans la tour de séchage.

8. Procédé selon la revendication 1 à 6, **caractérisé en ce que** l'agent antiadhérent est introduit totalement ou partiellement via une conduite de transport dans l'air chaud amené pour le séchage dans le canal d'air chaud.

9. Procédé selon la revendication 1 à 8, **caractérisé en ce qu'**un ou plusieurs agents antiadhérents se trouvant sous forme d'agglomérats sont introduits en mélange avec un ou plusieurs agents antiadhérents non agglomérés dans le séchage par pulvérisation.

10. Procédé selon la revendication 1 à 8, **caractérisé en ce qu'**un ou plusieurs agents antiadhérents ne se trouvant pas sous forme agglomérée sont ajoutés après le séchage par pulvérisation à la poudre polymère sèche.
